# EUROPÄISCHE PATENTSCHRIFT

(11) **EP 2 552 570 B1**
(45) Veröffentlichungstag und Bekanntmachung des Hinweises auf die Patenterteilung: **30.04.2014**
(21) Anmeldenummer: 11724531.6
(22) Anmeldetag: 22.03.2011
(51) Int. Cl.: B01D 53/77, B01D 53/14, C01B 17/04

(54) **VERFAHREN UND VORRICHTUNG ZUR VERARBEITUNG EINES KOHLENDIOXIDREICHEN SAUERGASES IN EINEM CLAUS-PROZESS**
METHOD AND DEVICE FOR PROCESSING SOUR GAS RICH IN CARBON DIOXIDE IN A CLAUS PROCESS
PROCÉDÉ ET DISPOSITIF POUR LE TRAITEMENT D'UN GAZ ACIDE RICHE EN DIOXYDE DE CARBONE DANS UN PROCÉDÉ CLAUS

(30) Priorität: 29.03.2010 DE 102010013279
(43) Veröffentlichungstag der Anmeldung: 06.02.2013
(73) Patentinhaber: ThyssenKrupp Uhde GmbH, 44141 Dortmund (DE)
(72) Erfinder: MENZEL, Johannes, 45731 Waltrop (DE)
(86) Internationale Anmeldenummer: PCT/EP2011/001398
(87) Internationale Veröffentlichungsnummer: WO 2011/124326

(56) Entgegenhaltungen:
- EP-A1- 1 338 557
- JP-A- 10 028 837

## Beschreibung

Die Erfindung betrifft ein Verfahren zur Verarbeitung eines kohlendioxidreichen Sauergases in einem Claus-Prozess. Die Erfindung betrifft auch eine Vorrichtung, mit der das Verfahren ausgeführt wird, wobei diese Vorrichtung eine Kombination aus Austriebsstufe ("Flash"-Stufe) und Regenerationskolonne umfasst, durch die das zur Gaswäsche eingesetzte Absorptionsmittel von kohlendioxidreichem Sauergas befreit wird, und einen Claus-Brenner mit nachgeschaltetem Claus-Reaktor.

Viele technische Gase, wie beispielsweise Erdgas, Synthesegas, Raffineriegase oder Kokereigase müssen vor der Verwendung von darin enthaltenen Sauergasen befreit werden, weil diese Stoffe in der weiteren Verarbeitung stören. Typische Sauergase, die bei der Weiterverarbeitung stören und deswegen aus den erwünschten Gasen abgetrennt werden müssen, sind Schwefelwasserstoff (H₂S), Carbonylsulfid (COS), organische Schwefelverbindungen, Ammoniak (NH₃) oder Blausäure (HCN). Diese Gase wirken korrosiv und giftig. Ein Weg, diese aus den erwünschten Gasen zu entfernen, ist eine Gaswäsche mit physikalisch absorbierenden Lösungsmitteln. Geeignete sauergasabsorbierende Lösungsmittel sind beispielsweise Propylencarbonat, N-Methylpyrrolidon, alkylierte Polyethylenglykolether und Methanol. Es lassen sich auch chemisch absorbierende Lösungsmittel einsetzen, jedoch besitzen diese nur eine geringe Aufnahmekapazität für organische Schwefelverbindungen. Beispiele für chemisch absorbierende Lösungsmittel sind Ethanolamine oder Alkalisalzlösungen.

Zur Rückgewinnung der in den Sauergasen enthaltenen Schwefelverbindungen werden die aus der Regenerationseinrichtung des Gaswaschprozesses stammenden Sauergase in der Regel einer Claus-Anlage zugeführt, in der ein Teilstrom des abgetrennten Schwefelwasserstoffes zu Schwefeldioxid verbrannt wird und dieses anschließend entsprechend der Claus-Reaktion mit dem Reststrom an Schwefelwasserstoff zu Schwefel umgewandelt wird. Der Schwefel kann auf verschiedenste Art weiterverwendet werden.

Die zu reinigenden technischen Gase enthalten häufig neben den Schwefelkomponenten, wie Schwefelwasserstoff (H₂S), Kohlenoxidsulfid (COS), Merkaptane auch höhere Anteile an Kohlendioxid (CO₂). Hohe Anteile an Kohlendioxid ergeben sich beispielsweise bei Synthesegasprozessen, bei der das in der Synthesegaserzeugung gebildete Kohlenmonoxid durch eine CO-Konvertierung in Kohlendioxid umgewandelt wird, so dass diese technischen Gase häufig größere Mengen an Kohlendioxid enthalten. Der Anteil des Kohlendioxids kann dabei bis zu 50 Volumenprozent (Vol.-%) im konvertierten Synthesegas betragen. Dagegen kann andererseits der Gehalt an Schwefelkomponenten im konvertierten Synthesegas je nach dem Einsatzstoff zur Synthesegaserzeugung sehr niedrig sein, wobei Anteile unter 0.1 Vol.-% möglich sind.

Bei einer Gaswäsche, ob physikalisch oder chemisch, lässt es sich nicht vermeiden, dass neben den Schwefelkomponenten, die aus dem Synthesegas entfernt werden müssen, auch ein signifikanter Anteil des im zu reinigenden Gas befindlichen Kohlendioxids mit aus dem Einsatzgas ausgewaschen wird, so dass die in der Regenerationseinrichtung der Gaswäsche wieder freigesetzten Sauergase häufig zu einem großen Teil aus Kohlendioxid bestehen. Dieses stört bei der Weiterverarbeitung des Sauergases in einer Clausanlage, weil die brennbaren Sauergase wegen der Verdünnung mit dem inerten Kohlendioxid nur einen geringen Heizwert besitzen und dadurch nicht oder nur sehr schwer die für einen stabilen Claus-Ofenbetrieb notwendige hohe Temperatur von mindestens 850 - 900°C erzielt werden kann.

Aus diesem Grund gibt es im Stand der Technik Verfahren, die eine Trennung des Kohlendioxids von den schwefelhaltigen Sauergasen ermöglichen. Die DE 10332427 A1 lehrt ein Verfahren zur Entfernung von Schwefelwasserstoff und weiteren Sauergaskomponenten aus unter Druck befindlichen, technischen Gasen mittels eines physikalischen Waschmittels sowie die Gewinnung von Schwefel aus Schwefelwasserstoff unter Einsatz einer Claus-Anlage. Die zu reinigenden technischen Gase werden in dem Prozess durch eine Gaswäsche mit geeigneten absorbierenden Lösungsmitteln von den darin enthaltenen Sauergasen befreit und das beladene Absorptionsmittel einer Regeneration zugeführt. Die Gaswäsche wird mehrstufig ausgeführt, wobei die einzelnen Regenerationsstufen sowohl untereinander verschiedene Druckstufen als auch gegenüber der Absorption einen geringeren Druck aufweisen, so dass man ein an Schwefelkomponenten angereichertes Sauergas erhält. Der erhaltene schwefelhaltige Sauergasstrom wird einem Claus-Prozess zugeführt, dessen Restgas nach Hydrierung zur vollständigen Entschwefelung beispielhaft in die Regenerationsstufen zurückgeführt wird. Die EP-A-1 338 557 A offenbart ein weiteres Verfahren aus dem Stand der Technik.

Insbesondere wenn ein technisches Gas mit einem hohem Kohlendioxidgehalt, z.B. 30 Vol.-% bis 50 Vol.-% CO₂, bei gleichzeitig niedrigem Schwefelgehalt, z.B. 0.1 Vol.-% bis 1 Vol.-% H₂S, entschwefelt werden soll, muss mit einem sehr hohen Aufwand in der Sauergaswäsche gerechnet werden, um ein Sauergas zu erzeugen, das einen für die weitere Verarbeitung in einer Claus-Anlage noch ausreichend hohen Schwefelgehalt aufweist, da die bei selektiven Waschmitteln vorhandene chemische oder physikalische Selektivität des Waschmittels in der Regel nicht ausreicht, um für solche Fälle eine akzeptabel hohe Schwefelkonzentration in der Sauergasfraktion zu erzielen.

Es besteht deshalb die Aufgabe, einen kostengünstigen Prozess zur Verfügung zu stellen, der Schwefelkomponenten aus einem kohlendioxidreichen technischen Gas entfernt und diese einem Claus-Prozess so zuführt, dass diese in der Claus-Anlage auch noch stabil verarbeitet werden können.

Die Erfindung löst diese Aufgabe durch einen Prozess, der das zu reinigende technische Nutzgas zunächst einer Gaswäsche mit einem physikalisch oder chemisch wirkenden für Schwefelkomponenten, insbesondere Schwefelwasserstoff (H₂S), selektiv wirkenden Lösungsmittel unterzieht, wobei man eine Sauergasfraktion erhält, welche in eine Regenerationseinrichtung geführt wird, und das bei der Regeneration freiwerdende Sauergas in mindestens eine an Schwefelkomponenten abgereicherte Sauergasfraktion auftrennt, wobei dann die an Schwefelkomponenten angereicherte Sauergasfraktion der thermischen Reaktionsstufe des Claus-Prozesses zugeführt wird, in der die mit Schwefelkomponenten angereicherte Sauergasfraktion entsprechend den Erfordernissen des Claus-Prozesses zu Schwefeldioxid verbrannt wird, und wobei die aus der Regenerationseinrichtung stammende, kohlendioxidreiche, aber an Schwefelkomponenten abgereicherte Sauergasfraktion den heißen Verbrennungsgasen, die den Brenner und die thermische Reaktionsstufe des Claus-Prozesses verlassen, zugemischt wird.

Die Auftrennung in mindestens zwei Sauergasfraktionen erfolgt bevorzugt dadurch, dass das mit Sauergasen beladene Lösungsmittel aus der Gaswäsche vor der Zuführung in eine Regenerationskolonne zunächst zur Kohlendioxidabreicherung in eine Austriebsstufe geführt wird, bei der eine kohlendioxidreiche Sauergasfraktion und ein mit den restlichen Sauergasen beladenes Lösungsmittel erhalten wird, wobei eine weitere an Kohlendioxid abgereicherte und an Schwefelkomponenten angereicherte Sauergasfraktion erhalten wird, welche zur Verbrennung mit einem sauerstoffhaltigen Gas in den Claus-Brenner geführt wird. Das Verhältnis von kohlendioxidreicher und schwefelarmer Sauergasfraktion zu schwefelreichem Sauergas kann durch die Betriebsparameter des Austriebsbehälters bestimmt werden, wodurch vorteilhaft der Claus-Prozess gesteuert werden kann.

Die erste Stufe eines Claus-Reaktors wird typischerweise ohne weitere Begleitstoffe ausgeführt, so dass die Reaktion zwischen Schwefeldioxid (SO₂) und Schwefelwasserstoff (H₂S) aufgrund der hohen Reaktionstemperatur abläuft. Man spricht dabei auch von einer thermischen Claus-Reaktionsstufe. Da diese Reaktion in der Regel nur unvollständig abläuft, wird die Reaktion häufig in einer nachfolgenden Reaktionsstufe bei niedrigerer Temperatur vervollständigt. Da hierzu ein katalytischer Claus-Reaktor notwendig ist, spricht man auch von einer katalytischen Claus-Reaktionsstufe.

Beansprucht wird insbesondere ein Verfahren zur Entschwefelung von schwefelwasserstoff- und kohlendioxidhaltigen sauren Prozessgasen, wobei
(a) ein von Schwefelkomponenten zu reinigendes technisches Gas, welches mindestens Schwefelwasserstoff und Kohlendioxid als Sauergaskomponenten enthält, zunächst durch eine Gaswäsche mit einem sauergasabsorbierenden Lösungsmittel, welches Schwefelkomponenten stärker absorbiert als Kohlendioxid, geleitet wird, und
(b) das beladene Lösungsmittel zur Regeneration in eine Regenerationseinrichtung geführt wird, und
(c) das bei der Regeneration freiwerdende Sauergas, bestehend aus Schwefelkomponenten und Kohlendioxid (CO₂) in mindestens zwei Sauergasfraktionen aufgetrennt wird, und mindestens eine Sauergasfraktion mit einem höheren Gehalt an Schwefelkomponenten gewonnen wird, und
(d) die Fraktion mit dem höchsten Schwefelwasserstoff-(H₂S)-Gehalt dem Claus-Brenner eines Claus-Reaktors zugeführt wird, und wobei die enthaltenen Schwefelkomponenten mit einem Sauerstoff enthaltenden Gas wenigstens teilweise zu einem Schwefeldioxid (SO₂) enthaltenden Gas umgesetzt werden, und
(e) die heißen Verbrennungsabgase in den hinter dem Brenner befindlichen Reaktionsraum abgeführt werden und dort mit mindestens einer kohlendioxidreichen Sauergasfraktion aus der Regenerationseinrichtung vermischt werden.

Die Erfindung ermöglicht für besonders kohlendioxidreiche Einsatzgase aufgrund der angereicherten Schwefelfraktion einen stabilen Betrieb in der Verbrennungszone, im Gegensatz zu der Verfahrensweise nach dem Stand der Technik, bei der eine gemeinsame Fraktion der Verbrennungsstufe des Claus-Prozesses zugeführt wird. Wird im Rahmen der Erfindung reiner Sauerstoff als Oxidationsmittel für die Verbrennung der schwefelreichen Fraktion verwendet, so ergibt sich auch in diesem Fall ein stabiler Betrieb in der Sauergasverbrennung, wenn die gemeinsame Sauergasfraktion bereits ein nicht mehr brennbares Gemisch aufweisen sollte.

Der Claus-Reaktionsraum ist üblicherweise als einfacher Reaktionsraum mit einer feuerfesten Ausmauerung konstruiert, da die thermische Claus-Reaktion bei den hohen Temperaturen hinter dem Brenner von etwa 900 °C ohne weitere Begleitstoffe abläuft. Der Umsetzungsgrad zu Schwefel beträgt dabei etwa 40-60%, bezogen auf das Einsatzgas. Das aus dem Claus-Reaktionsraum austretende schwefelhaltige Gas wird nach dem Stand der Technik in eine Claus-Verarbeitungsstufe geleitet, die üblicherweise aus einer Abkühlstrecke, einer Kondensationsstrecke für den Schwefel und Claus-Nachreaktoren besteht, in denen nicht umgesetztes Schwefeldioxid (SO₂) mit Schwefelwasserstoff (H₂S) umgesetzt wird.

In einer Ausführungsform der Erfindung wird das den Reaktionsraum verlassende schwefelhaltige Gas als Claus-Prozessgas den weiteren Prozessschritten einer katalytischen Claus-Anlage zugeführt. Dadurch wird die unvollständige Reaktion zwischen Schwefelwasserstoff (H₂S) und Schwefeldioxid (SO₂) in dem Claus-Prozessgas vervollständigt.

In einer weiteren Ausführungsform der Erfindung wird ein Teilstrom des kohlendioxidreichen, aber an Schwefelkomponenten abgereicherten Sauergasstroms aus der Claus-Anlage ausgeführt. Dieser Teilstrom des kohlendioxidreichen, aber an Schwefelkomponenten abgereicherten Sauergasstroms kann beispielhaft für eine beliebige Weiterverarbeitung ausgeführt werden.

In einer Ausführungsform der Erfindung erfolgt die Auftrennung in mindestens zwei Sauergasfraktionen dadurch, dass das mit Sauergasen beladene Lösungsmittel aus der Gaswäsche vor der Zuführung in eine Regenerationskolonne zunächst zur Kohlendioxidabreicherung in eine Austriebsstufe geführt wird, bei der eine kohlendioxidreiche Sauergasfraktion und ein mit den restlichen Sauergasen beladenes Lösungsmittel erhalten werden, wobei in der Regenerationskolonne eine weitere an Kohlendioxid abgereicherte und an Schwefel komponenten angereicherte Sauergasfraktion erhalten wird, welche zur Verbrennung mit einem sauerstoffhaltigen Gas in den Claus-Brenner geführt wird.

Die Abreicherung des beladenen Lösungsmittels an Kohlendioxid wird bevorzugt in zwei bis vier Austriebsstufen, die der Regenerationskolonne in Strömungsrichtung vorgeschaltet sind, vorgenommen. Es kann jedoch eine beliebige Anzahl an Austriebsstufen verwendet werden. Der Prozess zur Absorption, der Entspannung in der Austriebsstufe, und der Regeneration kann beliebig sein und ist im Stand der Technik bekannt. Die Menge an Schwefelkomponenten des in Schwefelkomponenten angereicherten Teilstroms, der dem Brenner des Claus-Reaktors zugeführt wird, beträgt typischerweise 20 bis 40 Prozent des Schwefels aus dem Einsatzgas. Auf diese Weise ist es möglich, den Brenner stabil und ohne Zufuhr von zusätzlichem Brenngas zu betreiben. Es soll im Rahmen des erfindungsgemäßen Verfahrens möglich sein, dieses Verhältnis zu ändern, falls Anpassungen an den Claus-Prozess dies erfordern.

Der Claus-Brenner wird mit einem sauerstoffhaltigen Gas betrieben, welches beispielhaft Luft ist. Je nach Auslegung ist es jederzeit möglich, sauerstoffangereicherte Luft oder reinen Sauerstoff im Claus-Brenner als sauerstoffhaltiges Gas zu nutzen, um einen zeitweise oder permanent niedrigen Heizwert der schwefelreichen Sauergasfraktion auszugleichen. Bei der Verbrennung der Schwefelkomponenten aus dem Sauergas erhält man im Claus-Brenner die für den Claus-Prozess benötigte Menge an Schwefeldioxid (SO₂). In einer weiteren Ausführungsart der Erfindung wird die Luft, die mit Sauerstoff angereicherte Brennluft oder das an Kohlendioxid abgereicherte, mit Schwefelwasserstoff angereicherte Sauergas mittels eines Wärmetauschers vorgewärmt, bevor es dem Brenner zugeführt wird. Dadurch wird der Schwefelkomponentengehalt in der Sauergasfraktion zum Claus-Brenner noch weiter abgesenkt.

In dieser Ausführungsart der Erfindung wird die schwefelreiche Sauergasfraktion mittels eines Brenners und unter Verwendung von Luft, sauerstoffangereicherter Luft oder reinem Sauerstoff vollständig verbrannt, wobei der Lambda-Wert Eins oder näherungsweise Eins beträgt. Der Lambda-Wert bezeichnet das stöchiometrische Verhältnis von Brennstoff zu Sauerstoff, wobei ein Lambda-Wert von mehr als 1 einen Sauerstoffüberschuss kennzeichnet.

In einer Ausführungsart der Erfindung ist es möglich, dass permanent oder zeitweise ein Teilstrom aus dem schwefelreichen Sauergas abgezweigt wird und in den Gasmischraum des Claus-Reaktors zur Erhöhung des Schwefelwasserstoffanteils geführt wird. Die Menge der Schwefelkomponenten, die zum Claus-Brenner geführt wird und vollständig mit Sauerstoff zu Schwefeldioxid umgesetzt wird, wird über eine By-Pass-Regelung so eingeregelt, dass die Schwefelkomponentenmenge, die dem Claus-Brenner zugeführt wird, in etwa ein Drittel der Gesamtschwefelmenge aller Sauergasfraktionen beträgt und wobei die überschüssige Schwefelkomponentenmenge dem Claus-Prozessgas im Prozessgasweg hinter dem Claus-Brenner zugeführt wird.

Der schwefelreichen Sauergasfraktion kann auch ein Brenngas beigemischt werden, um den Heizwert der Sauergasfraktion zum Brenner zu erhöhen, um so die Temperatur im Claus-Brenner weiter zu erhöhen, wenn beispielhaft ammoniakhaltige Brüden mit verarbeitet werden. In diesem Fall ist eine Brenngastemperatur von 1300 °C bis 1400 °C notwendig, um das Ammoniak nahezu vollständig zu zersetzen. Damit wird sichergestellt, dass es zu keiner Ammoniaksalzbildung im nachfolgenden Claus-Prozess kommt. Das Brenngas kann beliebig geartet sein. Bevorzugt handelt es sich bei dem Brenngas um Erdgas, Synthesegas, und Wasserstoff. Dem Brenngas kann auch ein kohlendioxidreiches Sauergas beigemischt werden, wenn eine optimale Prozessführung dies erfordert.

Auch dem Claus-Brenner kann ein Brenngas zugeführt werden. Dieses kann kohlenwasserstoffhaltig sein. Dem Brenngas, welches dem Claus-Brenner zugeführt wird, wird beispielhaft ein sauerstoffhaltiges Gas in einem gleichmolaren Verhältnis zugeführt, welches genau die vollständige Verbrennung des zugeführten Brenngases gewährleistet.

Auch das zu reinigende technische Gas kann beliebig sein. Prinzipiell ist es möglich, jedes Kohlendioxid und Schwefelkomponenten enthaltende Gas erfindungsgemäß zu behandeln. Dies gilt insbesondere für Synthesegase, die aus einer "sauren" CO-Konvertierung stammen. Ein anderes Beispiel für ein zu reinigendes Gas ist Erdgas oder auch Kokereigas.

Das für die Absorption verwendete Lösungsmittel ist bevorzugt ein physikalisches Lösungsmittel mit einer hohen Selektivität für Schwefelkomponenten, insbesondere Schwefelwasserstoff (H₂S), gegenüber Kohlendioxid (CO₂). Beispiele für geeignete physikalische Lösungsmittel sind Morphysorb^{®} (Gemisch enthaltend N-Formylmorpholin und N-Acetylmorpholin), Selexol^{®} (Gemisch enthaltend Dimethylether von Polyethylenglykolen), N-Methylpyrrolidon (NMP), Methanol oder Propylencarbonat. Allerdings kann auch ein chemisches Lösungsmittel, das für eine selektive Entfernung von Schwefelkomponenten gegenüber Kohlendioxid (CO₂) geeignet ist, in wässriger Lösung verwandt werden. Beispiele für chemische Lösungsmittel sind Methyldiethanolamin (MDEA), Flexsorb^{®} (Gemisch enthaltend sterisch gehinderte Amine) oder Alkalisalz-Lösungen (z.B. Pottasche-Lösungen).

Der Kohlendioxidgehalt des technischen Gases, das gereinigt werden soll, kann beliebig sein. So kann der Gehalt an Kohlendioxid im Einsatzgas 30 bis 50 Volumenprozent betragen. Die Anwendung der erfindungsgemäßen Verfahrensweise ist besonders vorteilhaft, wenn der Schwefelkomponentengehalt klein im Vergleich zum Kohlendioxidgehalt ist. So lassen sich Gase reinigen, deren Gehalt an Schwefelkomponenten bei 0,1 bis 1 Volumenprozent Schwefelwasserstoff (oder moläquivalent) liegt. Das zu reinigende technische Gas kann auch Ammoniak enthalten. Das Ammoniak wird dann ebenfalls in den Claus-Brenner geführt und aufgrund der eingestellten Temperaturen von 1300 °C bis 1400 °C, je nach Sauerstoffgehalt, zu Stickstoff und Wasser umgesetzt.

Der Druck und die Temperatur in der Absorptionskolonne des Gaswaschprozesses liegen in der Regel bei 5 bar bis 100 bar und 50 °C bis 80 °C. Der Druck und die Temperatur zur Ausführung der Entspannung in der Austriebsstufe liegen in der Regel bei 1 bar bis 5 bar und 60 °C bis 150 °C. Durch Änderung dieser Werte kann der Claus-Prozess beeinflusst werden. So erhält man bei Erhöhung der Temperatur oder der Erniedrigung des Druckes in der Austriebsstufe typischerweise einen höheren Anteil an Schwefel in der kohlendioxidreichen Sauergasfraktion. Dem kohlendioxidreichen Strom oder dem Claus-Brenner können neben der an Schwefelkomponenten angereicherten Sauergasfraktion, dem sauerstoffhaltigem Gas und gegebenenfalls dem Brenngas vor der Zuführung in den Claus-Reaktor auch ammoniakhaltige Abgase zugeführt werden. Dies können beispielsweise Brüden oder ammoniakhaltige Abgase aus Abwasseraustriebsvorrichtungen sein.

Auch der thermische Claus-Reaktor kann beliebig geartet sein. Ausführungsarten hierzu sind im Stand der Technik bekannt. Das Abgas aus dem thermischen Claus-Reaktor wird typischerweise in den weiteren katalytischen Claus-Reaktorstufen entsprechend dem Stand der Technik zu Schwefel umgesetzt. Das Abgas aus der Claus-Anlage kann weiter gereinigt werden, entsorgt werden oder auch teilweise in den erfindungsgemäßen Prozess zurückgeführt werden. Das den Reaktionsraum verlassende Claus-Prozessgas kann auch einer konventionellen Claus-Anlage und einer weiteren, nachgeschalteten Hydrierstufe zugeführt werden, so dass man ein hydriertes Claus-Restgas erhält.

Ein Teilstrom des kohlendioxidreichen, aber an Schwefelkomponenten abgereicherten Sauergasstroms kann auch hinter dem gesamten Claus-Prozess dem hydrierten Claus-Prozessgas zugeführt werden, nachdem das Claus-Prozessgas einer Hydrierstufe zugeführt wurde, in der alle Schwefelkomponenten des Claus-Prozessgases zu Schwefelwasserstoff (H₂S) hydriert wurden. In einer weiteren Ausführungsform wird das hydrierte Claus-Prozessgas einer weiteren selektiven Gaswäsche zugeführt. In dieser nachgeschalteten Gaswäsche wird dann der restliche Schwefelwasserstoff bis auf Spuren von dem aus den zusammengeführten Gasen erhaltenen Claus-Restgas abgetrennt.

Das die Gaswäsche verlassende Claus-Restgas ist nahezu schwefelfrei. Um die restlichen Spuren an Schwefelwasserstoff zu beseitigen wird, kann das entschwefelte Claus-Restgas einer Nachverbrennung zugeführt und das erhaltene Abgas in die Atmosphäre geleitet werden.

Die Nachverbrennung wird typischerweise mit einem Brenner ausgeführt. Der Brenner der Nachverbrennung kann auch mit einem zusätzlichen Brenngas betrieben und das erhaltene Abgas in die Atmosphäre geleitet werden. Der Brenner der Nachverbrennung wird in einer Ausführungsform der Erfindung mit einem zusätzlichen Brenngas betrieben.

In einer Ausführungsform der Erfindung wird das bei der Regeneration des beladenen Lösungsmittels aus der zusätzlichen selektiven Gaswäsche erhaltene, an Schwefelwasserstoff angereicherte Sauergas in den Brenner der Claus-Anlage geführt.

Eine weitere Möglichkeit ist es auch, den kohlendioxidreichen Teilstrom direkt einem Kompressor für die Gasrückführung zuzuführen, der diesen Strom zusammen mit dem hydrierten Claus-Restgasstrom wieder in den Hauptprozessgasweg vor die Entschwefelungsanlage zurückführt.

Beansprucht wird auch eine Vorrichtung, mit der das erfindungsgemäße Verfahren ausgeführt wird. Beansprucht wird insbesondere eine Vorrichtung zur Entschwefelung von schwefelwasserstoff- und kohlendioxidhaltigen sauren Prozessgasen, umfassend
- eine Absorptionskolonne,
- eine Füllkörperkolonne, die als Austriebsstufe geartet ist,
- eine Regenerationskolonne,
- ein Claus-Brenner, der mit einer "Bypass"-Regelung ausgestattet ist,
- ein Claus-Reaktionsraum,
wobei die Absorptionskolonne, die Austriebsstufe, die Regenerationskolonne, der Claus-Brenner und der Claus-Reaktionsraum in Strömungsrichtung hintereinander angeordnet sind, und der Claus-Brenner im Prozessfluss mit der Regenerationskolonne verbunden ist, und das Lösungsmittel aus der Austriebsstufe in die Regenerationskolonne führbar ist, und das regenerierte Lösungsmittel zurück in die Absorptionskolonne führbar ist, und die Sauergasfraktion aus der Austriebsstufe in den Claus-Reaktionsraum zuführbar ist, und die Sauergasfraktion aus der Regenerationskolonne in den Claus-Brenner zuführbar ist.

In einer bevorzugten Ausführungsform befindet sich in der Rückführungsleitung des Lösungsmittels aus der Regenerationskolonne ein Wärmetauscher, mit dem das kalte Lösungsmittel aus der Absorptionskolonne mit dem heißen, beladenen Lösungsmittel aus der Regenerationskolonne vorgewärmt wird.

Der Claus-Brenner, der zur Verbrennung der schwefelreichen Sauergasfraktion verwendet wird, kann beliebig geartet sein. Um den Claus-Brenner auf den Prozess einstellen zu können, besitzt dieser vorteilhaft einen weiteren Zuführungsstutzen für ein Brenngas. Dieser kann für kohlenwasserstoffhaltige Brenngase ausgelegt sein. Vorteilhafterweise besitzt der Brenner zur Ausführung des Claus-Prozesses ebenfalls einen Zuführungsstutzen für ein sauerstoffangereichertes Gas oder für Sauerstoff. Der Claus-Brenner ist mit einer Bypass-Regelung ausgestattet.

Der Claus-Reaktionsraum kann ebenfalls beliebig geartet sein und ist im einfachsten Fall ein leerer, ausgemauerter Behälterraum. Ausführungsarten hierzu sind im Stand der Technik hinreichend bekannt. Um den erfindungsgemäßen Prozess ausführen zu können, besitzt der Reaktionsraum einen Stutzen zur Zuführung des kohlendioxidreichen Sauergases und eine Verbindung vom Claus-Brenner in den Reaktionsraum. Der Reaktionsraum kann auch Zuführungsstutzen für ammoniakhaltige Gase oder Brüden besitzen.

Auch die übrigen Vorrichtungsbestandteile, wie Absorptionskolonnen, Austriebsstufen ("Flash-Stufen") und Regenerationskolonnen können beliebig geartet sein und sind im Stand der Technik bekannt. Zur erfindungsgemäßen Vorrichtung gehören auch Ventile, Pumpen, Kompressoren, Heiz- und Kühlvorrichtungen, Wärmetauscher und alle Vorrichtungsbestandteile, die zum Betrieb der beschriebenen Anlage benötigt werden. Diese können im Prozessfluss an beliebiger Stelle angeordnet sein. Selbstverständlich gehören dazu auch die notwendigen Steuerungseinrichtungen.

Das erfindungsgemäße Verfahren besitzt den Vorteil, eine vollständige und einfache Entschwefelung kohlendioxidreicher Sauergase zu ermöglichen und selbst bei insgesamt geringen Mengen an Schwefelkomponenten im Sauergas kann durch die Verbrennung der H₂S-reichen Sauergasfraktion die benötigte Mindestverbrennungstemperatur für den Claus-Prozess erzielt werden, während diese Mindesttemperatur bei der Verwendung des Claus-Prozesses mit nur einer Sauergasfraktion nicht erzielt werden würde.

Die erfindungsgemäße Vorrichtung wird anhand von drei Zeichnungen erläutert, wobei diese Zeichnungen nur Ausführungsbeispiele für die Konstruktion der erfindungsgemäßen Vorrichtung sind.

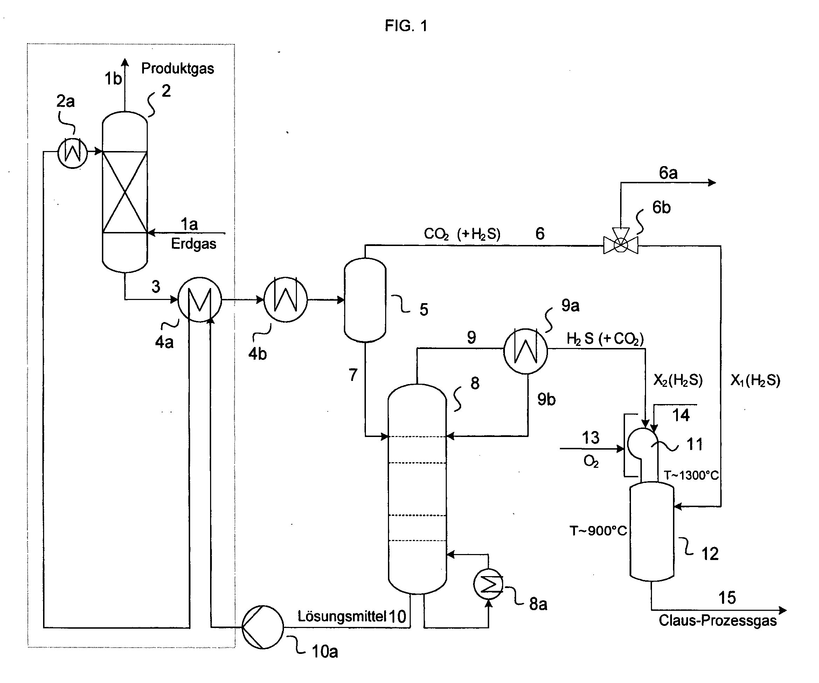

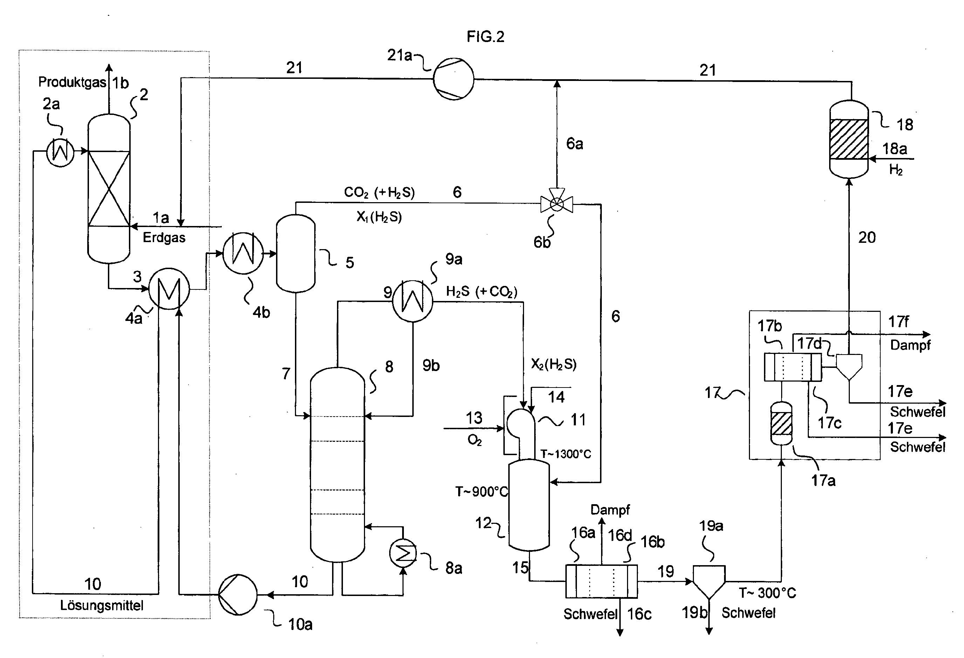

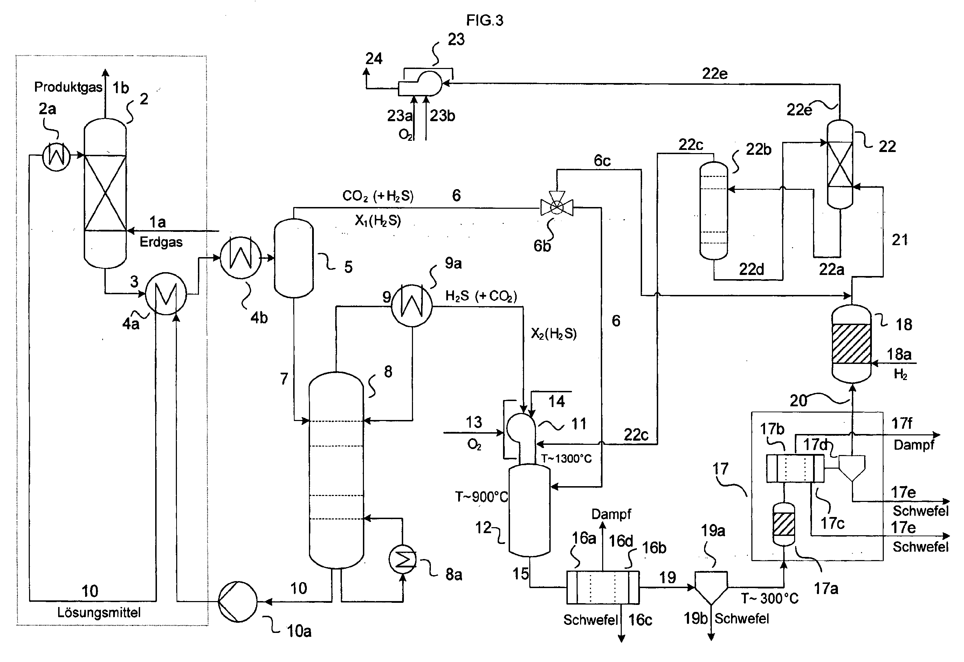

FIG.1 zeigt eine erfindungsgemäße Ausführungsform, in der ohne weitere Zwischenschritte ein Claus-Prozessgas zur Verarbeitung erhalten wird. FIG.2 zeigt eine erfindungsgemäße Ausführungsform, in der das aus der thermischen Reaktionsstufe austretende Claus-Prozessgas einer konventionellen katalytischen Claus-Stufe, einer Hydrierstufe und einer Rückführung zugeführt wird. FIG.3 zeigt eine Ausführungsform, in der das erhaltene Claus-Prozessgas nach Verlassen des Reaktionsraums durch eine konventionelle Claus-Stufe, in eine Hydrierstufe und durch eine Gaswäsche geführt wird.

FIG. 1 zeigt einen erfindungsgemäßen Prozessfluß. Ein zu reinigendes, schwefelhaltiges technisches Gas **(1a),** z.B. Erdgas, wird durch eine Absorptionskolonne **(2)** geleitet, in der es mit einem durch einen Wärmetauscher **(2a)** abgekühlten absorbierenden Lösungsmittel in Kontakt gebracht wird. Dadurch erhält man ein gereinigtes Produktgas **(1 b),** das frei ist oder nahezu frei ist von Schwefelverbindungen, wobei der größere Teil des im Einsatzgas **(1a)** enthaltenen Kohlendioxids auch im Produktgas **(1b)** verbleibt, und das mit Sauergasen beladene Lösungsmittel **(3).** Das beladene Lösungsmittel wird erfindungsgemäß durch Wärmetauscher **(4a,4b)** vorgewärmt, und in einen Austriebsbehälter **(5)** geführt. Bei der Entspannung in dem Austriebsbehälter **(5)** erhält man eine kohlendioxidbeladene, schwefelwasserstoffarme Sauergasfraktion **(6),** die arm an Schwefelverbindungen ist und ein an Kohlendioxid abgereichertes, mit Schwefelkomponenten angereichertes beladenes Lösungsmittel **(7).** Dieses wird in eine Regenerationskolonne **(8)** geführt, die hier beispielhaft mit einem Reboiler **(8a)** beheizt wird, und durch Erhitzen und Entspannen von dem an Schwefelkomponenten angereicherten Sauergas befreit. Dabei erhält man ein an Kohlendioxid abgereichertes, mit Schwefelkomponenten angereichertes Sauergas **(9),** und ein regeneriertes Lösungsmittel **(10).** Das Sauergas **(9)** wird über einen Kondensator **(9a)** in den Claus-Brenner **(11)** geführt wird. Brüdendampfkondensat **(9b)** wird in die Regenerationskolonne **(8)** zurückgeführt. Die kohlendioxidbeladene, schwefelwasserstoffarme Sauergasfraktion **(6),** die aus dem Austriebsbehälter **(5)** kommt, besitzt eine niedrigere Schwefelkomponentenkonzentration (X₁ (H₂S)) als die an Schwefelkomponenten reichere Sauergasfraktion **(9)** aus der Regenerationskolonne **(8)** (X₂, (H₂S)). Das von Sauergaskomponenten befreite, regenerierte Lösungsmittel **(10)** wird mittels einer Pumpe **(10a)** über einen Wärmetauscher **(4a)** in die Absorptionskolonne **(2)** zurückgeführt.

Erfindungsgemäß wird das mit Kohlendioxid abgereicherte, mit Schwefelkomponenten angereicherte Sauergas **(9)** zum Betrieb des Claus-Brenners **(11)** verwendet und das kohlendioxidbeladene, schwefelwasserstoffarme Sauergas **(6),** welches an Schwefelkomponenten abgereichert ist, in den Claus-Reaktionsraum **(12)** der thermischen Reaktionsstufe geführt. Der Claus-Brenner **(11)** wird mit Sauerstoff oder einem sauerstoffhaltigen Gas **(13)** betrieben. In einer typischen Ausführungsform liegt die Temperatur im Claus-Brenner **(11)** bei 1300 °C und nach der Mischung der heißen Abgase aus dem Claus-Brenner **(11)** mit der kohlendioxidbeladenen, schwefelwasserstoffarmen Sauergasfraktion **(6)** stellt sich im Claus-Reaktionsraum **(12)** eine Mischtemperatur von ca. 900 °C ein. In dem Claus-Brenner **(11)** können dem kohlendioxidarmen, schwefelwasserstoffreichen Sauergas **(9)** ammoniakhaltige Brüden **(14)** zugeführt werden. Als Produkt erhält man aus dem Claus-Reaktionsraum **(12)** ein Claus-Prozessgas **(15).** Ein Teilstrom **(6a)** des kohlendioxidbeladenen, schwefelwasserstoffarmen Sauergases **(6)** kann bei Bedarf über ein Ventil **(6b)** aus der Anlage ausgeführt und einer Weiterverwendung zugeführt werden.

FIG.2 zeigt den gleichen Prozess wie in FIG. 1, mit einem nachfolgenden Schwefelrückgewinnungsteil **(16),** einem nachfolgenden konventionellen Claus-Reaktionsteil **(17),** und einer Hydrierstufe **(18).** Erfindungsgemäß wird das mit Kohlendioxid abgereicherte, mit Schwefelkomponenten angereicherte Sauergas **(9)** zum Betrieb des Claus-Brenners **(11)** verwendet und das kohlendioxidbeladene, schwefelwasserstoffarme Sauergas **(6),** welches an Schwefelkomponenten abgereichert ist, in den Claus-Reaktionsraum **(12)** geführt. Anschließend wird das Claus-Prozessgas **(15)** aus dem Claus-Reaktionsraum **(12)** ausgeführt. Von dort wird es in einen Schwefelrückgewinnungsteil **(16)** ausgeführt, der aus einer Abkühlungsstrecke **(16a)** und einer Schwefelkondensationsstrecke **(16b)** besteht. Dadurch erhält man flüssigen Schwefel **(16c).** Durch den Abkühlungsprozess wird weiterhin Dampf **(16d)** gewonnen. Das teilentschwefelte Claus-Prozessgas **(19)** wird durch einen nachfolgenden Schwefelabscheider **(19a)** von Schwefeltröpfchen **(19b)** befreit. Das aus dem Schwefelrückgewinnungsteil **(16)** erhaltene teilentschwefelte Claus-Prozessgas **(19)** wird in eine nachfolgende katalytische Claus-Reaktionsstufe **(17)** geleitet. Dort wird das teilentschwefelte Claus-Prozessgas **(19)** in einem nachfolgenden konventionellen Claus-Reaktionsteil **(17)** weiter zu Schwefel **(17e)** umgesetzt. Der Claus-Reaktionsteil **(17)** umfasst typischerweise einen katalytischen Claus-Reaktor **(17a),** welcher restlichen Schwefelwasserstoff mit Schwefeldioxid weiter zu Schwefel umsetzt, einen weiteren Schwefelkondensationsteil **(17c),** und einen Schwefelabscheider **(17d).** Dabei werden flüssiger Schwefel **(17e)** und Dampf **(17f)** erhalten. Durch diese nachfolgende Umsetzung werden z.B. in einer zweistufigen, katalytischen Claus-Reaktionsstufe **(17)** Umsetzungsgrade der gesamten Claus-Reaktion von etwa 96% (bezogen auf das Ausgangsgas **(1a))** erhalten. Das so erhaltene Claus-Restgas **(20)** wird nun einer Hydrierstufe **(18)** mit einer dazu notwendigen Gasvorwärmung zugeführt. Das so erhaltene hydrierte Claus-Restgas **(21)** enthält Schwefel nur noch ausschließlich als Schwefelwasserstoff (H₂S). Das hydrierte Claus-Restgas **(21)** wird gegebenenfalls über ein Ventil **(6b)** mit einem Teilstrom des kohlendioxidbeladenen, schwefelwasserstoffarmen Sauergases **(6a)** vermischt, und mittels eines Rückführkompressors (21a) in den Hauptprozessgasweg dem Einsatzgas **(1a)** zurückgeführt.

FIG. 3 zeigt den gleichen Prozess wie FIG. 1, mit einem nachfolgenden Schwefelrückgewinnungsteil **(16),** einem nachfolgenden konventionellen Claus-Reaktionsteil **(17),** und einer Hydrierstufe **(18).** Erfindungsgemäß wird das mit Kohlendioxid abgereicherte, mit Schwefelkomponenten angereicherte Sauergas **(9)** zum Betrieb des Claus-Brenners **(11)** verwendet und das kohlendioxidbeladene, schwefelwasserstoffarme Sauergas **(6),** welches an Schwefelkomponenten abgereichert ist, in den Claus-Reaktionsraum **(12)** geführt. Anschließend wird das Claus-Prozessgas **(15)** aus dem Claus-Reaktionsraum **(12)** ausgeführt. Von dort wird es in einen Schwefelrückgewinnungsteil **(16)** geführt, der aus einer Abkühlungsstrecke **(16a)** und einer Schwefelkondensationsstrecke **(16b)** besteht. Dadurch erhält man flüssigen Schwefel **(16c).** Durch den Abkühlungsprozess wird weiterhin Dampf **(16d)** gewonnen. Das teilentschwefelte Claus-Prozessgas **(19)** wird durch einen nachfolgenden Schwefelabscheider **(19a)** von Schwefeltröpfchen befreit. Das aus dem Schwefelrückgewinnungsteil **(16)** erhaltene Prozessgas **(19)** wird dann in einen nachfolgenden Claus-Reaktionsteil **(17)** geleitet. Dort wird das teilentschwefelte Claus-Prozessgas **(19)** in einem nachfolgenden konventionellen Claus-Reaktionsteil **(17)** weiter zu Schwefel **(17e)** umgesetzt. Der Claus-Reaktionsteil **(17)** umfasst typischerweise einen katalytischen Claus-Reaktor **(17a),** welcher restlichen Schwefelwasserstoff mit Schwefeldioxid weiter zu Schwefel umsetzt, einen weiteren Schwefelkondensationsteil **(17c),** und einen Schwefelabscheider **(17d).** Dabei werden flüssiger Schwefel **(17e)** und Dampf **(17f)** erhalten. Durch diese nachfolgende Umsetzung werden z.B. in einer zweistufigen katalytischen Claus-Reaktionsstufe **(17)** Umsetzungsgrade der gesamten Claus-Reaktion von etwa 96% (bezogen auf das Ausgangsgas **(1a))** erhalten.

Das so erhaltene Claus-Restgas **(20)** wird nun einer Hydrierstufe **(18)** zugeführt. In der Hydrierstufe **(18)** werden alle Schwefelkomponenten zu Schwefelwasserstoff (H₂S) hydriert. Das hydrierte Clausrestgas **(21)** wird nun einer selektiven Gaswäsche **(22)** zugeführt. Der im hydrierten Clausrestgas enthaltene restliche Schwefelwasserstoff (H₂S) wird in einer nachfolgenden Gaswaschstufe über eine Absorptionskolonne **(22)** nahezu vollständig ausgewaschen und aus dem beladenen Lösungsmittel **(22a)** in einer dazugehörigen Regenerationskolonne **(22b)** als Sauergasfraktion **(22c)** zurückgewonnen. Diese Sauergasfraktion **(22c)** wird als zusätzliche Sauergasfraktion in den Brenner **(11)** der thermischen Reaktionsstufe der Claus-Anlage geführt und zu Schwefeldioxid (SO₂) verbrannt. Das regenerierte Lösungsmittel **(22d)** wird im Kreis geführt. Ein Teilstrom **(6c)** des kohlendioxidbeladenen, schwefelwasserstoffarmen Sauergases kann ebenfalls vor die Absorptionskolonne **(22)** geführt werden. Zusammen mit dem Claus-Restgas **(21)** wird dieser Prozessgastrom in der selektiven Gaswäsche **(22)** von Schwefelwasserstoff (H₂S) befreit und das erhaltene entschwefelte Claus-Restgas **(22e)** einer Nachverbrennung **(23)** zugeführt. Dort wird es mit einem sauerstoffhaltigen Gas **(23a)** gegebenenfalls unter Zusatz eines Brenngases **(23b)** verbrannt. Das Abgas **(24)** enthält nur noch geringe Mengen an Schwefeldioxid (SO₂) und kann in die Atmosphäre geleitet werden.

Bezugszeichenliste
- 1a: Zu reinigendes, schwefelhaltiges technisches Gas, Erdgas
- 1b: Gereinigtes Produktgas
- 2: Absorptionskolonne
- 2a: Wärmetauscher
- 3: Beladenes Lösungsmittel
- 4a,4b: Wärmetauscher
- 5: Austriebsbehälter ("Flash-Behälter")
- 6: Kohlendioxidbeladenes, schwefelwasserstoffarmes Sauergas
- 6a: Teilstrom des kohlendioxidbeladenen, schwefelwasserstoffarmen Sauergases
- 6b: Ventil
- 7: An Kohlendioxid abgereichertes, mit Schwefelkomponenten angereichertes, beladenes Lösungsmittel
- 8: Regenerationskolonne
- 8a: Reboiler
- 9: An Kohlendioxid abgereichertes, mit Schwefelwasserstoff angereichertes Sauergas
- 9a: Kondensator
- 9b: Rückgeführter Teilstrom
- 10: Regeneriertes Lösungsmittel
- 10a: Pumpe
- 11: Claus-Brenner/Brennkammer
- 12: Claus-Reaktionsraum
- 13: Sauerstoff oder sauerstoffhaltiges Gas
- 14: Ammoniakhaltige Brüden
- 15: Heißes Claus-Prozessgas
- 16: Schwefelrückgewinnungsstufe
- 16a: Abkühlungsstrecke
- 16b: Schwefelkondensationsstrecke
- 16c: Schwefel
- 16d: Dampf
- 17: Konventioneller Claus-Reaktionsteil
- 17a: Katalytischer Claus-Reaktor
- 17b: Abkühlungsstrecke
- 17c: Kondensationsstufe
- 17d: Schwefelabscheider
- 17e: Schwefel
- 17f: Dampf
- 18: Hydrierstufe
- 18a: Wasserstoff
- 19: Entschwefeltes Claus-Prozessgas
- 19a: Schwefelabscheider
- 19b: Schwefel
- 20: Claus-Restgas
- 21: Hydriertes Claus-Restgas
- 21a: Rückführkompressor
- 22: Absorptionskolonne der Gaswäsche
- 22a: Beladenes Lösungsmittel
- 22b: Regenerationskolonne
- 22c: Sauergasfraktion
- 22d: Regeneriertes Lösungsmittel
- 22e: Entschwefeltes Claus-Restgas
- 23: Nachverbrennung
- 23a: Sauerstoffhaltiges Gas
- 23b: Brenngas
- 24: Abgas
- X₁(H₂S): Konzentration an H₂S in dem kohlendioxidreichen Sauergas
- X₂ (H₂S): Konzentration an H₂S in der mit H₂S angereicherten Sauergasfraktion

## Patentansprüche

1. Verfahren zur Verarbeitung eines kohlendioxidreichen Sauergases (6) in einem Claus-Prozess, wobei
(a) ein von Schwefelkomponenten zu reinigendes technisches Gas (1a), welches mindestens Schwefelwasserstoff und Kohlendioxid als Sauergaskomponenten enthält, zunächst durch eine Gaswäsche (2) mit einem sauergasabsorbierenden Lösungsmittel, welches Schwefelkomponenten stärker absorbiert als Kohlendioxid, geleitet wird, und
(b) das beladene Lösungsmittel (3) zur Regeneration in eine Regenerationseinrichtung (5) geführt wird, und
(c) das bei der Regeneration freiwerdende Sauergas, bestehend aus Schwefelkomponenten und Kohlendioxid (CO₂) in mindestens zwei Sauergasfraktionen (6,9) aufgetrennt wird, und mindestens eine Sauergasfraktion (9) mit einem höheren Gehalt an Schwefelkomponenten gewonnen wird, und
(d) die Fraktion mit dem höchsten Schwefelwasserstoff-(H₂S)-Gehalt (9) dem vorgeschalteten Claus-Brenner (11) der thermischen Reaktionsstufe eines Claus-Reaktors (12) zugeführt wird, und wobei die enthaltenen Schwefelkomponenten wenigstens teilweise mit einem Sauerstoff enthaltenden Gas (13) zu einem Schwefeldioxid (SO₂) enthaltenden Gas umgesetzt werden, und
(e) die heißen Verbrennungsabgase in den hinter dem Brenner befindlichen Reaktionsraum (12) abgeführt werden und dort mit mindestens einer kohlendioxidreichen Sauergasfraktion (6) aus der Regenerationseinrichtung (5) vermischt werden.

2. Verfahren zur Verarbeitung eines kohlendioxidreichen Sauergases (6) in einem Claus-Prozess nach Anspruch 1, **dadurch gekennzeichnet, dass** das den Reaktionsraum (12) verlassende Claus-Prozessgas (15) in einem weiteren Prozessschritt einer katalytischen Clausanlage (17) zugeführt wird.

3. Verfahren zur Verarbeitung eines kohlendioxidreichen Sauergases (6) in einem Claus-Prozess nach Anspruch 1 oder 2, **dadurch gekennzeichnet, dass** ein Teilstrom (6a) des kohlendioxidreichen, aber an Schwefelkomponenten abgereicherten Sauergasstroms (6) für eine beliebige Weiterverarbeitung ausgeführt wird.

4. Verfahren zur Verarbeitung eines kohlendioxidreichen Sauergases (6) in einem Claus-Prozess nach Anspruch 1 bis 3, **dadurch gekennzeichnet, dass** die Auftrennung in mindestens zwei Sauergasfraktionen (6,9) dadurch erfolgt, dass das mit Sauergasen beladene Lösungsmittel (3) aus der Gaswäsche (2) vor der Zuführung in eine Regenerationskolonne (8) zunächst zur Kohlendioxidabreicherung in eine Austriebsstufe (5) geführt wird, bei der eine kohlendioxidreiche Sauergasfraktion (6) und ein mit den restlichen Sauergasen beladenes Lösungsmittel (7) erhalten wird, wobei in der Regenerationskolonne (8) eine weitere an Kohlendioxid abgereicherte und an Schwefelkomponenten angereicherte Sauergasfraktion (9) erhalten wird, welche zur Verbrennung mit einem sauerstoffhaltigen Gas (13) in den Claus-Brenner (11) geführt wird.

5. Verfahren zur Verarbeitung eines kohlendioxidreichen Sauergases (6) in einem Claus-Prozess nach einem der Ansprüche 1 bis 4, **dadurch gekennzeichnet, dass** die Abreicherung des beladenen Lösungsmittels (3) an Kohlendioxid in zwei bis vier Austriebsstufen (5), die der Regenerationskolonne (8) in Strömungsrichtung vorgeschaltet sind, vorgenommen wird.

6. Verfahren zur Verarbeitung eines kohlendioxidreichen Sauergases (6) in einem Claus-Prozess nach einem der Ansprüche 1 bis 5, **dadurch gekennzeichnet, dass** die Menge an Schwefelkomponenten, die in dem an Schwefelkomponenten angereicherten Teilstrom (9), der dem Brenner (11) des Claus-Reaktors zugeführt wird, 20 bis 40 Prozent des gesamten Schwefels aus dem Einsatzgas (1a) beträgt.

7. Verfahren zur Verarbeitung eines kohlendioxidreichen Sauergases (6) in einem Claus-Prozess nach einem der Ansprüche 1 bis 6, **dadurch gekennzeichnet, dass** es sich bei dem sauerstoffhaltigen Gas (13), mit dem der Claus-Brenner (11) betrieben wird, um Luft handelt.

8. Verfahren zur Verarbeitung eines kohlendioxidreichen Sauergases (6) in einem Claus-Prozess nach einem der Ansprüche 1 bis 6, **dadurch gekennzeichnet, dass** es sich bei dem sauerstoffhaltigen Gas (13), mit dem der Claus-Brenner (11) betrieben wird, um mit Sauerstoff angereicherte Luft handelt.

9. Verfahren zur Verarbeitung eines kohlendioxidreichen Sauergases (6) in einem Claus-Prozess nach einem der Ansprüche 1 bis 6, **dadurch gekennzeichnet, dass** es sich bei dem sauerstoffhaltigen Gas (13), mit dem der Claus-Brenner (11) betrieben wird, um reinen Sauerstoff handelt.

10. Verfahren zur Verarbeitung eines kohlendioxidreichen Sauergases (6) in einem Claus-Prozess nach einem der Ansprüche 1 bis 9, **dadurch gekennzeichnet, dass** das an Kohlendioxid abgereicherte, mit Schwefelwasserstoff angereicherte Sauergas (9), mit dem der Claus-Brenner (11) betrieben wird, mittels eines Wärmetauschers (9a) vorgewärmt wird, bevor es dem Brenner (11) zugeführt wird.

11. Verfahren zur Verarbeitung eines kohlendioxidreichen Sauergases (6) in einem Claus-Prozess nach einem der Ansprüche 1 bis 10, **dadurch gekennzeichnet, dass** dem an Kohlendioxid abgereicherten, und an Schwefelkomponenten angereicherten Sauergas (9) ein Brenngas beigemischt wird.

12. Verfahren zur Verarbeitung eines kohlendioxidreichen Sauergases (6) in einem Claus-Prozess nach einem der Ansprüche 1 bis 11, **dadurch gekennzeichnet, dass** dem Claus-Brenner (11) ein Brenngas zugeführt wird.

13. Verfahren zur Verarbeitung eines kohlendioxidreichen Sauergases (6) in einem Claus-Prozess nach einem der Ansprüche 11 oder 12, **dadurch gekennzeichnet, dass** es sich bei dem kohlenwasserstoffhaltigen Brenngas um Erdgas oder Synthesegas handelt.

14. Verfahren zur Verarbeitung eines kohlendioxidreichen Sauergases (6) in einem Claus-Prozess nach einem der Ansprüche 11 oder 12, **dadurch gekennzeichnet, dass** dem Brenngas, welches dem Claus-Brenner (11) zugeführt wird, ein sauerstoffhaltiges Gas (13) in einem gleichmolaren Verhältnis zugeführt wird, welches genau die vollständige Verbrennung des zugeführten Brenngases gewährleistet.

15. Verfahren zur Verarbeitung eines kohlendioxidreichen Sauergases (6) in einem Claus-Prozess nach einem der Ansprüche 1 bis 14, **dadurch gekennzeichnet, dass** dem Claus-Brenner (11) neben der an Schwefelkomponenten angereicherten Sauergasfraktion (9), dem sauerstoffhaltigem Gas (13) und gegebenenfalls dem Brenngas, auch ammoniakhaltige Abgase (14) zugeführt werden.

16. Verfahren zur Verarbeitung eines kohlendioxidreichen Sauergases (6) in einem Claus-Prozess nach einem der Ansprüche 1 bis 15, **dadurch gekennzeichnet, dass** für die Sauergaswäsche ein selektiv wirkendes chemisches Waschmittel verwendet wird.

17. Verfahren zur Verarbeitung eines kohlendioxidreichen Sauergases (6) in einem Claus-Prozess nach einem der Ansprüche 1 bis 15, **dadurch gekennzeichnet, dass** für die Sauergaswäsche ein physikalisch wirkendes Waschmittel verwendet wird.

18. Verfahren zur Verarbeitung eines kohlendioxidreichen Sauergases (6) in einem Claus-Prozess nach einem der Ansprüche 1 bis 17, **dadurch gekennzeichnet, dass** es sich bei dem zu reinigenden technischen Gas (1 a) zur Entschwefelung um Synthesegas aus einer CO-Konvertierung handelt.

19. Verfahren zur Verarbeitung eines kohlendioxidreichen Sauergases (6) in einem Claus-Prozess nach einem der Ansprüche 1 bis 17, **dadurch gekennzeichnet, dass** es sich bei dem zu reinigenden technischen Gas (1 a) zur Entschwefelung um ein Erdgas handelt.

20. Verfahren zur Verarbeitung eines kohlendioxidreichen Sauergases (6) in einem Claus-Prozess nach Anspruch 1 bis 19, **dadurch gekennzeichnet, dass** ein Teilstrom (6b) des kohlendioxidreichen, aber an Schwefelkomponenten abgereicherten Sauergasstroms (6) mittels eines Kompressors für die Gasrückführung (21 a) in den Hauptprozessgasweg (1 a) vor die Entschwefelung zurückgeführt wird.

21. Verfahren zur Verarbeitung eines kohlendioxidreichen Sauergases (6) in einem Claus-Prozess nach einem der Ansprüche 1 bis 20, **dadurch gekennzeichnet, dass** das den Reaktionsraum (12) verlassende Claus-Prozessgas (15) einem konventionellen Claus-Reaktionsteil (17) und einer weiteren, nachgeschalteten Hydrierstufe (18) zugeführt wird, so dass man ein hydriertes Claus-Restgas (21) erhält.

22. Verfahren zur Verarbeitung eines kohlendioxidreichen Sauergases (6) in einem Claus-Prozess nach Anspruch 21, **dadurch gekennzeichnet, dass** ein Teilstrom (6c) des kohlendioxidreichen, aber an Schwefelkomponenten abgereicherten Sauergasstroms (6) in das hydrierte Claus-Restgas (21) geführt wird.

23. Verfahren zur Verarbeitung eines kohlendioxidreichen Sauergases (6) in einem Claus-Prozess nach einem der Ansprüche 21 oder 22, **dadurch gekennzeichnet, dass** das hydrierte Claus-Restgas (21) einer weiteren selektiven Gaswäsche (22) zugeführt wird.

24. Verfahren zur Verarbeitung eines kohlendioxidreichen Sauergases (6) in einem Claus-Prozess nach Anspruch 23, **dadurch gekennzeichnet, dass** das entschwefelte Claus-Restgas (22e) in eine Nachverbrennung (23) geführt wird, und das erhaltene Abgas (24) in die Atmosphäre geleitet wird.

25. Verfahren zur Verarbeitung eines kohlendioxidreichen Sauergases (6) in einem Claus-Prozess nach Anspruch 24, **dadurch gekennzeichnet, dass** der Brenner der Nachverbrennung (23) mit einem zusätzlichen Brenngas (23b) betrieben wird.

26. Vorrichtung zur Verarbeitung eines kohlendioxidreichen Sauergases (6) in einem Claus-Prozess, umfassend
• eine Absorptionskolonne (2),
• eine Füllkörperkolonne, die als Austriebsstufe (5) geartet ist,
• eine Regenerationskolonne (8),
• einen Claus-Brenner (11), der mit einer "Bypass"-Regelung ausgestattet ist,
• einen Claus-Reaktionsraum (12),
wobei die Absorptionskolonne (2), die Austriebsstufe (5), die Regenerationskolonne (8), der Claus-Brenner (11) und der Claus-Reaktionsraum (12) in Strömungsrichtung hintereinander angeordnet sind, und der Claus-Brenner (11) im Prozessfluss mit der Regenerationskolonne (8) verbunden ist, und das Lösungsmittel aus der Austriebsstufe (5) in die Regenerationskolonne (8) führbar ist, und das regenerierte Lösungsmittel zurück in die Absorptionskolonne (2) führbar ist, und die kohlendioxidreiche Sauergasfraktion (6) aus der Austriebsstufe (5) in den Claus-Reaktionsraum (12) zuführbar ist, und die Sauergasfraktion (9) mit einem höheren Gehalt an Schwefelkomponenten aus der Regenerationskolonne (8) in den Claus-Brenner (11) zuführbar ist.

27. Vorrichtung zur Verarbeitung eines kohlendioxidreichen Sauergases (6) in einem Claus-Prozess nach Anspruch 26, **dadurch gekennzeichnet, dass** der Claus-Reaktionsraum (12) einen weiteren Zuführungsstutzen für ein kohlendioxidangereichertes Sauergas (6) besitzt.

28. Vorrichtung zur Verarbeitung eines kohlendioxidreichen Sauergases (6) in einem Claus-Prozess nach einem der Ansprüche 26 bis 27, **dadurch gekennzeichnet, dass** der Claus-Brenner (11) einen weiteren Zuführungsstutzen für ein Brenngas besitzt.

29. Vorrichtung zur Verarbeitung eines kohlendioxidreichen Sauergases (6) in einem Claus-Prozess nach einem der Ansprüche 26 bis 28, **dadurch gekennzeichnet, dass** der Claus-Brenner (11) einen weiteren Zuführungsstutzen für ammoniakhaltige Brüden (14) besitzt.

## Claims

1. Method for the processing of a carbon dioxide-rich acid gas (6) in a Claus process,
(a) an industrial gas to be freed from sulphur constituents (1a) and containing at least hydrogen sulphide and carbon dioxide as acid gas constituents is first submitted to gas scrubbing (2) using an acid gas-absorbing solvent which absorbs sulphur constituents more than carbon dioxide, and
(b) the laden solvent (3) is fed to a regeneration unit (5) for regeneration, and
(c) the acid gas liberated in the regeneration and consisting of sulphur constituents and carbon dioxide (CO₂) is separated into at least two acid gas fractions (6,9), and at least one acid gas fraction (9) of a higher content of sulphur constituents is obtained, and
(d) the fraction of the highest content of hydrogen sulphide (H₂S) (9) is fed to the upstream Claus burner (11) of the thermal reaction section of a Claus reactor (12), and the sulphur constituents contained being converted at least partially to form a sulphur dioxide (SO₂)-containing gas by the aid of an oxygen-containing gas (13), and
(e) the hot combustion gases are discharged into the reaction chamber (12) downstream of the burner where they are mixed with at least one carbon dioxide-rich acid gas fraction (6) from the regeneration unit (5).

2. Method for the processing of a carbon dioxide-rich acid gas (6) in a Claus process according to claim 1, **characterised in that** the Claus process gas (15) leaving the reaction chamber (12) is fed to a catalytic Claus plant (17) in a further process step.

3. Method for the processing of a carbon dioxide-rich acid gas (6) in a Claus process according to claim 1 or 2, **characterised in that** a part-stream (6a) of the carbon dioxide-rich but sulphur constituents-depleted acid gas stream (6) is discharged for any type of further processing.

4. Method for the processing of a carbon dioxide-rich acid gas (6) in a Claus process according to claims 1 to 3, **characterised in that** the separation into at least two acid gas fractions (6,9) is performed by first feeding the solvent laden with acid gases (3) from gas scrubbing (2) to a flash stage (5) for the depletion of carbon dioxide prior to feeding the solvent to a regeneration column (8), thereby obtaining a carbon dioxide-rich acid gas fraction (6) and a solvent laden with the residual acid gases (7), thereby obtaining in the regeneration column (8) another carbon dioxide-depleted and sulphur constituents-enriched acid gas fraction (9) fed to the Claus burner (11) for combustion using an oxygen-containing gas (13).

5. Method for the processing of a carbon dioxide-rich acid gas (6) in a Claus process according to any of claims 1 to 4, **characterised in that** the depletion in carbon dioxide of the laden solvent (3) is performed in two to four flash stages (5) arranged in flow direction upstream of the regeneration column (8).

6. Method for the processing of a carbon dioxide-rich acid gas (6) in a Claus process according to any of claims 1 to 5, **characterised in that** the amount of sulphur constituents in the sulphur constituents-enriched part-stream (9) fed to the burner (11) of the Claus reactor is 20 to 40 percent of the total sulphur from the feed gas (1 a).

7. Method for the processing of a carbon dioxide-rich acid gas (6) in a Claus process according to any of claims 1 to 6, **characterised in that** the oxygen-containing gas (13) used for operating the Claus burner (11) is air.

8. Method for the processing of a carbon dioxide-rich acid gas (6) in a Claus process according to any of claims 1 to 6, **characterised in that** the oxygen-containing gas (13) used for operating the Claus burner (11) is oxygen-enriched air.

9. Method for the processing of a carbon dioxide-rich acid gas (6) in a Claus process according to any of claims 1 to 6, **characterised in that** the oxygen-containing gas (13) used for operating the Claus burner (11) is pure oxygen.

10. Method for the processing of a carbon dioxide-rich acid gas (6) in a Claus process according to any of claims 1 to 9, **characterised in that** the carbon dioxide-depleted, hydrogen sulphide-enriched acid gas (9) used for operating the Claus burner (11) is preheated by means of a heat exchanger (9a) prior to being fed to the burner (11).

11. Method for the processing of a carbon dioxide-rich acid gas (6) in a Claus process according to any of claims 1 to 10, **characterised in that** a combustion gas is mixed to the carbon dioxide-depleted, sulphur constituents-enriched acid gas (9).

12. Method for the processing of a carbon dioxide-rich acid gas (6) in a Claus process according to any of claims 1 to 11, **characterised in that** a combustion gas is fed to the Claus burner (11).

13. Method for the processing of a carbon dioxide-rich acid gas (6) in a Claus process according to claim 11 or 12, **characterised in that** the hydrocarbonaceous combustion gas is natural gas or synthesis gas.

14. Method for the processing of a carbon dioxide-rich acid gas (6) in a Claus process according to claim 11 or 12, **characterised in that** an oxygen-containing gas (13) which ensures exactly the complete combustion of the supplied combustion gas is fed to the combustion gas fed to the Claus burner (11) at an equal molar ratio.

15. Method for the processing of a carbon dioxide-rich acid gas (6) in a Claus process according to any of claims 1 to 14, **characterised in that** ammonia-containing exhaust gases (14) are also fed to the Claus burner (11) apart from the sulphur constituents-enriched acid gas fraction (9), the oxygen-containing gas (13) and, if required, the combustion gas.

16. Method for the processing of a carbon dioxide-rich acid gas (6) in a Claus process according to any of claims 1 to 15, **characterised in that** a selectively acting chemical scrubbing agent is used for acid gas scrubbing.

17. Method for the processing of a carbon dioxide-rich acid gas (6) in a Claus process according to any of claims 1 to 15, **characterised in that** a physical scrubbing agent is used for acid gas scrubbing.

18. Method for the processing of a carbon dioxide-rich acid gas (6) in a Claus process according to any of claims 1 to 17, **characterised in that** the industrial gas to be treated (1 a) for desulphurisation is synthesis gas from a CO conversion.

19. Method for the processing of a carbon dioxide-rich acid gas (6) in a Claus process according to any of claims 1 to 17, **characterised in that** the industrial gas to be treated (1 a) for desulphurisation is a natural gas.

20. Method for the processing of a carbon dioxide-rich acid gas (6) in a Claus process according to claims 1 to 19, **characterised in that** a part-stream (6b) of the carbon dioxide-rich but sulphur constituents-depleted acid gas stream (6) is recycled by means of a compressor for gas recycling (21 a) to the main process gas stream (1a) upstream of the desulphurisation unit.

21. Method for the processing of a carbon dioxide-rich acid gas (6) in a Claus process according to any of claims 1 to 20, **characterised in that** the Claus process gas (15) leaving the reaction chamber (12) is fed to a conventional Claus reaction stage (17) and an additional downstream hydrogenation stage (18), thus obtaining a hydrogenated Claus tail gas (21).

22. Method for the processing of a carbon dioxide-rich acid gas (6) in a Claus process according to claim 21, **characterised in that** a part-stream (6c) of the carbon dioxide-rich but sulphur constituents-depleted acid gas stream (6) is fed to the hydrogenated Claus tail gas (21).

23. Method for the processing of a carbon dioxide-rich acid gas (6) in a Claus process according to claim 21 or 22, **characterised in that** the hydrogenated Claus tail gas (21) is fed to another selective gas scrubbing section (22).

24. Method for the processing of a carbon dioxide-rich acid gas (6) in a Claus process according to claim 23, **characterised in that** the desulphurised Claus tail gas (22e) is fed to a post-combustion unit (23) and the exhaust gas (24) obtained discharged into the atmosphere.

25. Method for the processing of a carbon dioxide-rich acid gas (6) in a Claus process according to claim 24, **characterised in that** the burner of the post-combustion unit (23) is operated with an additional combustion gas (23b).

26. Contrivance for the processing of a carbon dioxide-rich acid gas (6) in a Claus process, consisting of
• an absorption column (2),
• a packed column designed as flash stage (5),
• a regeneration column (8),
• a Claus burner (11) equipped with bypass control,
• a Claus reaction chamber (12),
the absorption column (2), the flash stage (5), the regeneration column (8), the Claus burner (11) and the Claus reaction chamber (12) being arranged in series in flow direction, and the Claus burner (11) being connected to the regeneration column (8) in process flow, with the contrivance allowing the solvent to be fed from the flash stage (5) to the regeneration column (8), and the regenerated solvent to be recycled to the absorption column (2), and the acid gas fraction (6) to be fed from the flash stage (5) to the Claus reaction chamber (12), and the acid gas fraction (9) to be fed from the regeneration column (8) to the Claus burner (11).

27. Contrivance for the processing of a carbon dioxide-rich acid gas (6) in a Claus process according to claim 26, **characterised in that** the Claus reaction chamber (12) is equipped with an additional feed nozzle for a carbon dioxide-enriched acid gas (6).

28. Contrivance for the processing of a carbon dioxide-rich acid gas (6) in a Claus process according to claim 26 or 27, **characterised in that** the Claus burner (11) is equipped with an additional feed nozzle for a combustion gas.

29. Contrivance for the processing of a carbon dioxide-rich acid gas (6) in a Claus process according to any of claims 26 to 28, **characterised in that** the Claus burner (11) is equipped with an additional feed nozzle for ammonia-containing vapours (14).

## Revendications

1. Procédé pour traiter un gaz acide riche en dioxyde de carbone (6) dans un procédé Claus, sachant que
(a) un gaz technique à épurer des composants soufrés (1a), contenant au moins de l'acide sulfhydrique et du dioxyde de carbone comme composants de gaz acide, est d'abord injecté dans un épurateur de gaz (2) avec un solvant absorbant le gaz acide et présentant une force d'absorption plus élevée des composants soufrés que du dioxyde de carbone et que
(b) le solvant chargé (3) est injecté dans un dispositif de régénération (5) pour y être régénéré et que
(c) le gaz acide libéré lors de la régénération, composé de composants soufrés et de dioxyde de carbone (CO₂) est séparé en au moins deux fraction de gaz acide (6,9) et qu'au moins une de ces fractions (9) est obtenue avec une teneur supérieure en composants soufrés et que
(d) la fraction présentant la plus forte teneur en acide sulfhydrique (H₂S) (9) est injectée dans le brûleur Claus situé en amont (11) et constitutif du niveau de réaction thermique d'un réacteur Claus (12), sachant que les composants soufrés sont au moins partiellement transformés à l'aide d'un gaz comprenant de l'oxygène (13) en un gaz comprenant du dioxyde de soufre (SO₂) et que
(e) les fumées de combustion chaudes sont refoulées dans l'espace de réaction (12) situé derrière le brûleur et qu'elles y sont mélangées à au moins une fraction de gaz acide riche en dioxyde de carbone (6) provenant du dispositif de régénération (5).

2. Procédé pour traiter un gaz acide riche en dioxyde de carbone (6) dans un procédé Claus conformément à la revendication 1, **caractérisé en ce que** le gaz de process Claus (15) quittant l'espace de réaction (12) est injecté dans une installation catalytique Claus (17) lors d'une étape ultérieure du process.

3. Procédé pour traiter un gaz acide riche en dioxyde de carbone (6) dans un procédé Claus conformément à la revendication 1 ou 2, **caractérisé en ce qu'**un flux partiel (6a) du flux de gaz acide riche en dioxyde de carbone mais appauvri en composants soufrés (6) est retiré pour un traitement ultérieur quelconque.

4. Procédé pour traiter un gaz acide riche en dioxyde de carbone (6) dans un procédé Claus conformément aux revendications 1 à 3, **caractérisé en ce que** la séparation en au moins deux fractions de gaz acide (6,9) est réalisée par le fait que le solvant chargé en gaz acides (3) provenant de l'épurateur de gaz (2) est, avant d'être injecté dans une colonne de régénération (8), d'abord injecté pour être appauvri en dioxyde de carbone dans un niveau d'expulsion (5) qui obtient une fraction de gaz acide (6) ainsi qu'un solvant chargé des gaz acides restants (7), sachant que dans la colonne de régénération (8) est obtenue une autre fraction de gaz acide appauvrie en dioxyde de carbone et enrichie en composants soufrés (9), laquelle est injectée dans le brûleur Claus (11) pour être brûlée avec un gaz oxygéné (13).

5. Procédé pour traiter un gaz acide riche en dioxyde de carbone (6) dans un procédé Claus conformément à une des revendications 1 à 4, **caractérisé en ce que** l'appauvrissement en dioxyde de carbone du solvant chargé (3) est réalisé en deux à quatre niveaux d'expulsion (5) situés en amont de la colonne de régénération (8) dans le sens de l'écoulement.

6. Procédé pour traiter un gaz acide riche en dioxyde de carbone (6) dans un procédé Claus conformément à une des revendications 1 à 5, **caractérisé en ce que** la quantité de composants soufrés qui dans le flux partiel enrichi en composants soufrés (9) injecté au brûleur (11) du réacteur Claus, comprend 20 à 40 pourcents du soufre total de la charge gazeuse.

7. Procédé pour traiter un gaz acide riche en dioxyde de carbone (6) dans un procédé Claus conformément à une des revendications 1 à 6, **caractérisé en ce que** le gaz oxygéné (13) utilisé pour exploiter le brûleur Claus (11) est de l'air.

8. Procédé pour traiter un gaz acide riche en dioxyde de carbone (6) dans un procédé Claus conformément à une des revendications 1 à 6, **caractérisé en ce que** le gaz oxygéné (13) utilisé pour exploiter le brûleur Claus (11) est de l'air enrichi en oxygène.

9. Procédé pour traiter un gaz acide riche en dioxyde de carbone (6) dans un procédé Claus conformément à une des revendications 1 à 6, **caractérisé en ce que** le gaz oxygéné (13) utilisé pour exploiter le brûleur Claus (11) est de l'oxygène pur.

10. Procédé pour traiter un gaz acide riche en dioxyde de carbone (6) dans un procédé Claus conformément à une des revendications 1 à 9, **caractérisé en ce que** le gaz acide appauvri en dioxyde de carbone et enrichi en acide sulfhydrique (9) servant à exploiter le brûleur Claus (11) est préchauffé au moyen d'un échangeur thermique (9a) avant d'être injecté dans le brûleur (11).

11. Procédé pour traiter un gaz acide riche en dioxyde de carbone (6) dans un procédé Claus conformément à une des revendications 1 à 10, **caractérisé en ce qu**'un gaz de combustion est mélangé au gaz acide appauvri en dioxyde de carbone et enrichi en acide sulfhydrique (9).

12. Procédé pour traiter un gaz acide riche en dioxyde de carbone (6) dans un procédé Claus conformément à une des revendications 1 à 11, **caractérisé en ce qu'**un gaz de combustion est injecté dans le brûleur Claus (11).

13. Procédé pour traiter un gaz acide riche en dioxyde de carbone (6) dans un procédé Claus conformément à une des revendications 1 ou 12, **caractérisé en ce que** le gaz de combustion hydrocarboné est du gaz naturel ou un gaz de synthèse.

14. Procédé pour traiter un gaz acide riche en dioxyde de carbone (6) dans un procédé Claus conformément à une des revendications 1 ou 12, **caractérisé en ce qu**'un gaz oygéné (13) garantissant la combustion complète du gaz de combustion injecté est injecté au brûleur Claus (11) dans des proportions équimolaires.

15. Procédé pour traiter un gaz acide riche en dioxyde de carbone (6) dans un procédé Claus conformément à une des revendications 1 à14, **caractérisé en ce qu**'en plus de la fraction de gaz acide enrichi en composants soufrés (9), du gaz oxygéné (13) et le cas échéant du gaz de combustion sont injectées dans le brûleur Claus (11) des fumées ammoniacales (14).

16. Procédé pour traiter un gaz acide riche en dioxyde de carbone (6) dans un procédé Claus conformément à une des revendications 1 à 15, **caractérisé en ce qu**'un agent de lavage à action chimique est utilisé pour épurer le gaz acide.

17. Procédé pour traiter un gaz acide riche en dioxyde de carbone (6) dans un procédé Claus conformément à une des revendications 1 à 15, **caractérisé en ce qu**'un agent de lavage à action physique est utilisé pour épurer le gaz acide.

18. Procédé pour traiter un gaz acide riche en dioxyde de carbone (6) dans un procédé Claus conformément à une des revendications 1 à 17, **caractérisé en ce que** le gaz technique (1a) à désulfurer est un gaz de synthèse provenant d'une conversion de CO.

19. Procédé pour traiter un gaz acide riche en dioxyde de carbone (6) dans un procédé Claus conformément à une des revendications 1 à 17, **caractérisé en ce que** le gaz technique (1 a) à désulfurer est du gaz naturel.

20. Procédé pour traiter un gaz acide riche en dioxyde de carbone (6) dans un procédé Claus conformément aux revendications 1 à 19, **caractérisé en ce que** le flux partiel (6b) du flux de gaz acide riche en dioxyde de carbone, mais appauvri en composants soufrés (6) est renvoyé avant la désulfuration dans la voie principale du gaz de process (1a) au moyen d'un compresseur pour la récupération du gaz (21 a).

21. Procédé pour traiter un gaz acide riche en dioxyde de carbone (6) dans un procédé Claus conformément à une des revendications 1 à 20, **caractérisé en ce que** le gaz de process Claus (15) quittant l'espace de réaction (12) est injecté dans une partie de réaction Claus conventionnelle (17) ainsi qu'un autre niveau d'hydrogénation en aval (18), de sorte à obtenir un gaz résiduel Claus hydrogéné (21).

22. Procédé pour traiter un gaz acide riche en dioxyde de carbone (6) dans un procédé Claus conformément à la revendication 21, **caractérisé en ce qu**'un flux partiel (6c) du flux de gaz acide riche en dioxyde de carbone mais appauvri en composants soufrés (6) est injecté dans le gaz résiduel Claus hydrogéné (21).

23. Procédé pour traiter un gaz acide riche en dioxyde de carbone (6) dans un procédé Claus conformément à une des revendications 21 ou 22, **caractérisé en ce que** le gaz résiduel Claus hydrogéné (21) est injecté dans un autre épurateur de gaz sélectif (22).

24. Procédé pour traiter un gaz acide riche en dioxyde de carbone (6) dans un procédé Claus conformément à la revendication 23, **caractérisé en ce que** le gaz résiduel Claus désulfuré (22e) est injecté dans une incinération secondaire (23) et que les fumées produites (24) sont rejetées dans l'atmosphère.

25. Procédé pour traiter un gaz acide riche en dioxyde de carbone (6) dans un procédé Claus conformément à la revendication 24, **caractérisé en ce que** le brûleur de la combustion secondaire (23) est exploité avec un gaz de combustion supplémentaire (23b).

26. Dispositif pour traiter un gaz acide riche en dioxyde de carbone (6) dans un procédé Claus, comprenant
• une colonne d'absorption (2),
• une colonne d'éléments de remplissage, conçue comme niveau d'expulsion (5),
• une colonne de régénération (8),
• un brûleur Claus (11) équipé d'un régulateur de débit par dérivation
• un espace de réaction Claus (12),
sachant que la colonne d'absorption (2), le niveau d'expulsion (5), la colonne de régénération (8), le brûleur Claus (11) et l'espace de réaction Claus (12) sont implantés successivement dans le sens de l'écoulement et que le brûleur Claus (11) est relié à la colonne de régénération (8) dans le flux du process et que le solvant provenant du niveau d'expulsion (5) peut être introduit dans la colonne de régénération (8), que le solvant régénéré peut être reconduit dans la colonne d'adsorption (2), que la fraction de gaz acide provenant du niveau d'expulsion peut être reconduite dans l'espace de réaction Claus (12) et que la fraction de gaz acide (9) provenant de la colonne de régénération (8) peut être reconduite dans le brûleur Claus (11).

27. Dispositif pour traiter un gaz acide riche en dioxyde de carbone (6) dans un procédé Claus conformément à la revendication 26, **caractérisé en ce que** l'espace de réaction Claus (12) comporte une tubulure d'alimentation supplémentaire pour un gaz acide enrichi en dioxyde de carbone (6).

28. Dispositif pour traiter un gaz acide riche en dioxyde de carbone (6) dans un procédé Claus conformément une des revendications 26 à 27, **caractérisé en ce que** le brûleur Claus (11) comporte une tubulure d'alimentation supplémentaire pour un gaz de combustion.

29. Dispositif pour traiter un gaz acide riche en dioxyde de carbone (6) dans un procédé Claus conformément une des revendications 26 à 27, **caractérisé en ce que** le brûleur Claus (11) comporte une tubulure d'alimentation supplémentaire pour les fumées ammoniacales (14).
